# EUROPEAN PATENT APPLICATION

(11) **EP 3 944 102 A1**
(43) Date of publication of application: **26.01.2022**
(21) Application number: 20425028.6
(22) Date of filing: 22.07.2020
(51) Int. Cl.: G06F 16/903, G06Q 10/06

(54) **DATA PROCESSING MANAGEMENT SYSTEM AND METHOD**

(71) Applicant: Accenture Global Solutions Limited, Dublin 4 (IE)
(72) Inventor: Grigoletti, Marco, 20159 Milano / MI (IT); De Iacovo, Claudio, 00166 Roma / RM (IT); Proietti, Massimiliano, 00133 Roma / RM (IT); Bielli, Marco, 28040 Oleggio Castello / NO (IT); Spitaleri, Luca Maria, 20032 Cormano / MI (IT); Podavitte, Giuseppe, 24054 Calcio (IT); Maffei, Diana, 28100 Novara / NO (IT); Beccari, Paolo, 20161 Milano / MI (IT); Casarini, Luca, 20090 Trezzano Sul Naviglio / MI (IT); Baldelli, Eleonora, 00174 Roma / RM (IT)
(74) Representative: Müller-Boré & Partner Patentanwälte PartG mbB

(57) **Abstract**

The disclosure concerns a data processing management system for automatically adapting a data processing workflow, in particular a telecommunications processing workflow, comprising a reception unit configured to receive data input in relation to a data processing request; a data processing request analysis unit configured to analyse the data input to determine at least one request parameter; a data processing workflow retrieval unit configured to access a predetermined data processing workflow database and to select a data processing workflow based on the at least one request parameter; a data processing workflow parameter unit configured to access a predetermined technical entity database and to select at least one technical entity based on the at least one request parameter; a data processing workflow adapting unit configured to adapt the selected data processing workflow by accessing a pre-defined task database and including at least one pre-defined task from the pre-defined task database into the selected data processing workflow based on the at least one request parameter and the at least one technical entity, and/or adapting at least one task of the selected data processing workflow based on the at least one request parameter and the at least one technical entity; and a data processing workflow execution unit configured to execute at least one task of the adapted data processing workflow.

## Description

The invention relates to a data processing management system for automatically adapting a data processing workflow, in particular a telecommunications data processing management system, a corresponding computer-implemented data processing management method, and a corresponding non-transient storage device containing instructions for executing the computer-implemented data processing management method.

The invention lies in the field of data management, in particular in the field of data processing management, and has specific application in the field of telecommunications data processing management. In particular, in telecommunications data processing, a system is required to be able to handle and execute a wide range of different data processing requests. Conventionally, this is achieved by hardcoding a plurality of different data processing workflows. In the scope of this invention, it was realised that such an approach requires significant skill and human resources when adapting data processing workflow. Accordingly, it is a problem, specifically in telecommunications data processing, to be able to handle and execute a wide range of different data processing requests and specifically adapt and expand existing systems in an easy and efficient manner.

The problem is solved by a data processing management system, a corresponding computer-implemented data processing management method, and a corresponding non-transient storage device according to the independent claims, respectively.

In particular, the invention is defined by the independent claims, while preferred embodiments are the subject of the dependent claims.

In particular, the invention may relate to a catalogue-based data processing management system. In particular, the system may provide a generic algorithm configured to automatically interpret the rules underlying different data processing workflows. Changing a particular workflow therefore only requires the changing of metadata in the catalogue, for example without any additional programming skills required. According to this invention, specifically due to the catalogue-driven architecture the development and deployment of new services and business requirements can be accelerated, having as key outcomes for business Service Time-to-Market (TTM) Improvements and reduced Total-Cost-of-Ownership (TCO). In particular, such a catalogue-based approach may allow for a separation between different building blocks, such as between customer-facing services and resource-facing services and/or between product-facing services and customer-facing services, which in turn allows to abstract the Business Support System (BSS) layer independent from the complexity of the commercial offer, thereby isolating between business and technical solution. Furthermore, launching of new products that do not require new Resource Facing Services (RFSs) or specific processes and that can reuse existing building blocks does not require any development but only configuration. The solution further executes the workflow by building dynamically the orchestration plan depending on the RFSs decomposed and leveraging on a generic algorithm that is able to interpret all the specific rules modeled in the catalogue. Finally, the catalogue driven validation/verification functionalities allow to easily add/remove any validation/verification checks via simple configuration.

One aspect relates to a data processing management system for automatically adapting a data processing workflow. The data processing management system may in particular be a telecommunications data processing management system, e.g. a telecommunications user profile management system. The data processing workflow may be any kind of workflow, which causes at least one of producing new data and adapting previous data. In particular, the data processing workflow may be a telecommunications processing workflow, such as a mobile prepaid activation workflow and/or SIM card activation workflow. However, the current disclosure may equally apply to other areas of telecommunication (such as DSL, ADSL, telephony, cable connection, etc.) or any other area that require a Workflow Management. Accordingly, the term SIM may be replaced by an appropriate term relating to one or more of the before mentioned technological areas.

The data processing management system in particular comprises a reception unit configured to receive data input in relation to a data processing request. The reception unit may be configured to receive the data input from a user, wherein a user may be a human user or a digital user, such as an application or program. The reception unit may comprise a textual input device, such as a keyboard, a voice input device, such as a microphone, and/or a digital input device, such as a data port or network interface, wherein the reception unit may be configured to receive the data input via at least one of the textual input device, the voice input device, and the digital input device. For example, the reception unit may be configured to receive data input over an interface, such as a web interface, and/or from another system.

The data processing management system in particular further comprises a data processing request analysis unit configured to analyse the data input to determine at least one request parameter. The data processing request analysis unit may be configured to use any method or means to perform the analysis, such as for example parsing of the data input and/or natural language processing. The at least one request parameter may comprise at least one parameter specific to the received data input and/or the data processing request. For example, the data processing request analysis unit may analyse a SIM activation data processing request and determine at least the request parameter "REQUEST_TYPE" to have the value "SIM_ACTIVATION". Alternatively or additionally, the data processing request analysis unit may be configured to further access a data inventory database and to retrieve at least one inventory parameter from the data inventory database, wherein the at least one inventory parameter may be associated with the data input and/or the data processing request. For example, if the data processing request relates to the activation of a SIM card for a client, the data processing request analysis unit may be configured to access the data inventory database to retrieve, for example, a service history of said client and/or parameters relating to an existing service provided to said client (e.g. a SIM_ID parameter of a previous SIM card associated with said client). The at least one request parameter may comprise at least one retrieved inventory parameter specific to the received data input and/or the data processing request.

The data processing management system in particular further comprises a data processing workflow retrieval unit configured to access a predetermined data processing workflow database and to select a data processing workflow, in particular of the predetermined data processing workflow database, based on the at least one request parameter. In particular, a selected data processing workflow may comprise at least one predetermined task to be executed and/or performed. Furthermore, a selected data processing workflow may comprise at least a predetermined sequence in which the at least one predetermined task is to be performed and/or executed. The predetermined data processing workflow database may contain at least one data processing workflow. In particular, the predetermined data processing workflow database may further comprise a blank workflow, wherein the blank workflow may be a data processing workflow comprising no tasks to be executed and/or performed. Furthermore, the predetermined data processing workflow database may comprise at least one request parameter association between each of the predetermined data processing workflows and at least one possible request parameter value. The data processing workflow retrieval unit may be configured to select a data processing workflow based on the at least one determined request parameter and the at least one request parameter association. The at least one request parameter association may also be referred to as one or more workflow selection rules. The one or more workflow selection rules and/or the at least one request parameter association may be comprised in one or more metadata tables, and/or the one or more workflow selection rules and/or the at least one request parameter association may be modifiable by a user.

For example, the predetermined data processing workflow database may comprise a SIM card activation workflow and a request parameter association between the SIM card activation workflow and a possible request parameter value of "SIM_ACTIVATION" of the request parameter "REQUEST_TYPE". When at least one request parameter of the data input is determined to be "REQUEST_TYPE" having the value "SIM_ACTIVATION", the data processing workflow retrieval unit may be configured to select the SIM card activation workflow based on the at least one determined request parameter and the at least one request parameter association.

The data processing management system may further comprise at least one predetermined data processing workflow database modification unit configured to modify one or more entries in the predetermined data processing workflow database. In particular, the at least one predetermined data processing workflow database modification unit may be configured to receive a workflow modification input from a user and to modify one or more entries in the predetermined data processing workflow database in response to the workflow modification input.

The data processing management system in particular further comprises a data processing workflow parameter unit configured to access a predetermined technical entity database and to select at least one technical entity based on the at least one request parameter. Furthermore, the data processing workflow parameter unit may be configured to assign to each selected technical entity a corresponding technical entity value based on the data input and/or the at least one request parameter. The predetermined technical entity database may contain at least one predetermined technical entity. In particular, the at least one technical entity may comprise one or more customer-facing services (CFS) and/or CFS parameters. In particular, the at least one technical entity may comprise one or more resource-facing services (RFS) and/or RFS parameters. Furthermore, the predetermined technical entity database may comprise at least one technical entity association between each of the predetermined technical entities and at least one possible request parameter value. The data processing workflow parameter unit may be configured to select at least one technical entity based on the at least one determined request parameter and the at least one technical entity association. The at least one technical entity association may also be referred to as one or more parameter selection rules. The one or more parameter selection rules and/or the at least one technical entity association may be comprised in one or more metadata tables, and/or the one or more parameter selection rules and/or the at least one technical entity association may be modifiable by a user.

For example, the predetermined technical entity database may comprise a SIM card access technical entity "SIM_ACCESS" and a technical entity association between the SIM card access technical entity and the possible request parameter value of "SIM_ACTIVATION" of the request parameter "REQUEST_TYPE". When at least one request parameter of the data input is determined to be "REQUEST_TYPE" having the value "SIM_ACTIVATION", the data processing workflow parameter unit may be configured to select at least the SIM card access technical entity "SIM_ACCESS" based on the at least one determined request parameter and the at least one technical entity association.

The data processing management system may further comprise at least one predetermined technical entity database modification unit configured to modify one or more entries in the predetermined technical entity database. In particular, the at least one predetermined technical entity database modification unit may be configured to receive a technical entity modification input from a user and to modify one or more entries in the predetermined technical entity database in response to the technical entity modification input.

The data processing management system further comprises a data processing workflow adapting unit configured to adapt the selected data processing workflow.

The data processing workflow adapting unit may be configured to adapt the selected data processing workflow by accessing a pre-defined task database and including at least one pre-defined task from the pre-defined task database into the selected data processing workflow based on the at least one request parameter and the at least one technical entity. In particular, the pre-defined task database may comprise one or more pre-defined tasks, wherein each of the one or more pre-defined tasks may be associated with at least one possible value of a request parameter and/or of a technical entity. The associations between each of the one or more pre-defined tasks and the at least one possible value of a request parameter and/or of a technical entity may also be referred to as one or more task selection rules. The one or more task selection rules may be comprised in one or more metadata tables, and/or the one or more workflow selection rules and/or the at least one request parameter association may be modifiable by a user. The data processing workflow adapting unit may comprise a duplication prevention module configured to prevent an inclusion of at least one pre-defined task from the pre-defined task database into the selected data processing workflow, if said at least one pre-defined task is already comprised by the selected data processing workflow. Therefore, it is possible to automatically and dynamically adapt the selected data processing workflow to include additional tasks to be executed and/or performed on the basis of the at least one request parameter and/or the at least one technical entity.

For example, the selected data processing workflow may be a SIM card activation workflow, a request parameter of the data input may be determined to be "REQUEST_TYPE" having the value "SIM_ACTIVATION", and a selected technical entity may be a SIM card access technical entity "SIM_ACCESS" having the value "FALSE". The pre-defined task database may comprise a pre-defined task "SET SIM_ACCESS to TRUE", which is associated with the request parameter "REQUEST_TYPE" having the value "SIM_ACTIVATION" and the technical entity "SIM_ACCESS" having the value "FALSE". The data processing workflow adapting unit may access the pre-defined task database and the duplication prevention module may optionally determine that the pre-defined task "SET SIM_ACCESS to TRUE" is not already comprised by the selected data processing workflow. The data processing workflow adapting unit may then adapt the selected data processing workflow to include the pre-defined task "SET SIM_ACCESS to TRUE" based on the at least one request parameter and the at least one technical entity.

The data processing management system may further comprise at least one pre-defined task database modification unit configured to modify one or more entries in the pre-defined task database. In particular, the at least one pre-defined task database modification unit may be configured to receive a task modification input from a user and to modify one or more entries in the pre-defined task database in response to the task modification input.

The data processing workflow adapting unit may be configured to adapt the selected data processing workflow by adapting at least one task of the selected data processing workflow based on the at least one request parameter and the at least one technical entity. The at least one task of the selected data processing workflow may be one of at least one predetermined task of the selected data processing workflow and at least one pre-defined task included into the selected data processing workflow. In particular, it may therefore be possible to directly, easily, and automatically adapt an existing data processing workflow.

For example, the selected data processing workflow may be a SIM card activation workflow, a request parameter of the data input may be determined to be "REQUEST_TYPE" having the value "SIM_ACTIVATION", and a selected technical entity may be a SIM card address technical entity having a specific SIM_ADDRESS value. The selected data processing workflow may comprise a pre-defined task "SEND config. message to", which is associated with the request parameter "REQUEST_TYPE" having the value "SIM_ACTIVATION" and the SIM card address technical entity. The data processing workflow adapting unit may adapt the selected data processing workflow by adapting the pre-defined task "SEND config. message to" to "SEND config. message to SIM_ADDRESS" based on the at least one request parameter and the at least one technical entity.

The data processing management system further comprises a data processing workflow execution unit configured to execute at least one task, preferentially all tasks, of the adapted data processing workflow. The data processing workflow execution unit may comprise one or more processors and/or one or more computing systems configured to execute at least one task of the adapted data processing workflow.

The at least one task of the adapted data processing workflow may comprise at least one CREATE task. A CREATE task may in particular correspond to a task to create one or more files and/or one or more parameters. For example, a task may be to CREATE a configuration file for a specific SIM card during SIM card activation.

The at least one task of the adapted data processing workflow may comprise at least one SET task. A SET task may in particular correspond to a task to modify a value of one or more parameters, such as one or more technical entities. For example, a task may be to SET the value of the technical entity "SIM_STATUS" to "ACTIVATED".

The at least one task of the adapted data processing workflow may comprise at least one DELETE task. A DELETE task may in particular correspond to a task to delete one or more files and/or one or more parameters. For example, a task may be to DELETE a pre-configuration file for a specific SIM card during SIM card activation.

The above exemplary task list is not to be interpreted as limiting. In particular, other possible tasks may be equally comprised by the adapted data processing workflow.

One or more different component units of the data processing management system, such as the reception unit, may be comprised in one or more local computing systems and/or computing environments. Alternatively or additionally, one or more different component units of the data processing management system, such as the reception unit, may be comprised in one or more distributed and/or networked computing systems and/or computing environments.

Preferentially, the at least one request parameter may comprise at least one of a request type, a request issue date, a request due date, a request ID, and a client ID.

Preferentially, the workflow execution unit may be configured to access a pre-determined execution data database and to retrieve execution data associated with the at least one task of the adapted data processing workflow. The pre-determined execution data database may in particular comprise execution data, wherein the execution data comprises specific information for executing the respective, associated at least one task. For example, the execution data of a specific associated task may include memory location information, naming rules, task execution sequences, necessary previous tasks to be completed before processing the specific task, and/or possible next tasks to be completed after processing the specific task. In particular, the execution data may comprise instructions for grouping one or more of the at least one task to be executed into one or more sub-processes. In particular, the execution data may further comprise special execution rules, wherein the special execution rules may correspond to specific requirements of the data processing workflow execution unit. This list is not to be interpreted as limiting, however, and is merely intended to give an example of possible execution data.

The pre-determined execution data database may further comprise a mapping between each of the at least one request parameters, the at least one technical entities, the at least one task of the adapted workflow, and/or an output of each of the executed tasks of the adapted data processing workflow.

Preferentially, the data processing workflow execution unit is configured to execute the at least one task of the adapted data processing workflow based on the retrieved execution data.

Preferentially, the selected data processing workflow may comprise one or more predetermined tasks.

Preferentially, the data processing workflow adapting unit may be further configured to adapt the selected data processing workflow by accessing the pre-determined execution data database and retrieving execution data associated with the one or more predetermined tasks of the selected data processing workflow, wherein the retrieved execution data comprises one or more execution rules. Said one or more execution rules may comprise one or more rules relating to a sequence, in which the one or more tasks of the adapted data processing workflow are to be executed and/or one or more rule relating to execution requirements for one or more task of the adapted data processing workflow. For example, the one or more execution rules may comprise one or more rules relating to execution sequences, necessary previous tasks to be completed before processing the specific task, and/or possible next tasks to be completed after processing the specific task. In particular, the data processing workflow adapting unit may be configured to adapt the selected data processing workflow by accessing the pre-determined execution data database and adapting the selected data processing workflow to adhere to the one or more execution rules. For example, the one or more execution rules may comprise a rule that a task "SET last_modified_date" may only be executed if the corresponding adapted data processing workflow has been adapted by the data processing workflow adapting unit. For example, the one or more execution rules may comprise a rule that a task "SET last_modified_date" may only be executed after the corresponding adapted data processing workflow has been adapted by the data processing workflow adapting unit. The execution data and/or the one or more execution rules may be comprised in one or more metadata tables. The execution data and/or the one or more execution rules may be modifiable by a user.

Preferentially, the data processing workflow adapting unit may be further configured to adapt the selected data processing workflow by accessing the pre-determined execution data database and retrieving execution data associated with the one or more predetermined tasks of the selected data processing workflow, and removing at least one predetermined task of the selected data processing workflow based on the at least one request parameter and/or the at least one technical entity and/or the retrieved execution data associated with the respective at least one predetermined task. Thereby, it may be possible to remove unnecessary or unwanted tasks from the selected data processing workflow in a simple, efficient, and automatic manner. For example, an exemplary request parameter may be "WELCOME_SMS_DESIRED = FALSE", wherein the data processing workflow adapting unit may be configured to remove a task "SEND WELCOME SMS" from the selected data processing workflow.

Preferentially, the data processing management system may further comprise a database updating unit configured to access the predetermined data processing workflow database, and store the adapted data processing workflow as a further data processing workflow in the predetermined data processing workflow database. In particular, it may therefore be possible to include newly adapted data processing workflows into the predetermined data processing workflow database, thereby significantly increasing the efficiency of the data processing management system.

Preferentially, the reception unit may further comprise a formal verification unit. The formal verification unit may comprise a formal rule database comprising at least one formal verification rule. The formal rule database may be implemented as one or more metadata tables. The at least one formal verification rule may be a formal rule and/or formal requirement necessary for the further processing of the data processing request. The at least one formal verification rule may be pre-determined and/or may be modifiable by a user. For example, the at least one formal verification rule may comprise a list of mandatory information to be contained in the received data input, minimum length and/or maximum length rules for information contained in the received data input, a list of required data formats for information contained in the received data input, and/or one or more custom verification rules based on the received data input. For example, at least one formal verification rule for a data processing workflow, such as a SIM card activation workflow, may be that a SIM_ID parameter and/or a subscription_ID parameter may not be null/void in the data input and/or the data processing request. The formal verification unit may be configured to check the received data input against the at least one formal verification rule to determine whether the received data input fulfils each of the at least one formal verification rule. If the formal verification unit determines that the received data input fulfils each of the at least one formal verification rule, the data processing management system may be configured to continue processing the data processing request, and, optionally, to set a formal verification flag as verified for the data processing request. If the formal verification unit determines that the received data input does not fulfil each of the at least one formal verification rule, the data processing management system may be configured to stop processing the data processing request, and, optionally, to set a formal verification flag as failed for the data processing request and/or to provide a user with a corresponding formal error information.

The data processing management system may further comprise an access verification unit. The access verification unit may comprise an access rule database comprising at least one access verification rule. The access rule database may be implemented as one or more metadata tables. The at least one access verification rule may be an access rule and/or access requirement necessary for the further processing of the data processing request. The at least one access verification rule may be pre-determined and/or may be modifiable by a user. For example, one access verification rule may be that the data processing management system may not process two data processing requests at the same time, if said data processing requests share one or more parameters, such as at least one request parameter. For example, at least one access verification rule for a data processing workflow, such as a SIM card activation workflow, may be that the data processing management system may not process two data processing requests having an identical SIM_ID parameter and/or INTERACTIONID parameter and/or SERVICE_ID parameter and/or CFS_CODE parameter at the same time. A further example may be that the data processing management system may not process two data processing requests, if said data processing requests share the same SUBSCRIPTION_ID parameter, while neither one of said data processing requests has an ORDER_TYPE parameter with a value of "MODIFY". The access verification unit may be configured to check the received data input against the at least one access verification rule to determine whether the received data input fulfils each of the at least one access verification rule. If the access verification unit determines that the received data input fulfils each of the at least one access verification rule, the data processing management system may be configured to continue processing the data processing request, and, optionally, to set an access verification flag as verified for the data processing request. If the access verification unit determines that the received data input does not fulfil each of the at least one access verification rule, the data processing management system may be configured to stop processing the data processing request, and, optionally, to set an access verification flag as failed for the data processing request and/or to provide a user with a corresponding access error information.

Preferentially, the data processing management system may in particular be configured to set an IN_PROGRESS flag for the received data input in relation to the data processing request. In particular, the IN_PROGRES flag may be set for one or more of the at least one request parameter, such as for the request ID. Specifically, the IN_PROGRESS flag may be set to indicate that the received data input and/or the corresponding data processing request is currently being processed by the data processing management system. In particular, the data processing management system may be configured to delete and/or to remove the set IN_PROGRESS flag once the data processing management system stops processing the respective data processing request and/or once the data processing workflow execution unit has executed a final task of the at least one task of the adapted data processing workflow. The access verification unit may be configured to check whether the IN_PROGRES flag has been set for the received data input and/or the data processing request to determine whether the received data input fulfils one or more of the at least one access verification rule.

The data processing management system may further comprise a consistency verification unit. The consistency verification unit may comprise a consistency rule database comprising at least one consistency verification rule. The consistency rule database may be implemented as one or more metadata tables. The at least one consistency verification rule may be a consistency rule and/or consistency requirement necessary for the further processing of the data processing request. The at least one consistency verification rule may be pre-determined and/or may be modifiable by a user. For example, at least one consistency verification rule for a data processing workflow, such as a SIM card subscription workflow, may be that the data processing management system may not process two subscription data process requests having an identical MSISDN (mobile subscription ISDN) parameter at the same time. According to another example, at least one consistency verification rule for a data processing workflow, such as a SIM card subscription workflow, may be that the data processing management system may not process a SIM preactivation data processing request having a MSISDN parameter value already present in the data inventory database. The consistency verification unit may be configured to check the received data input against the at least one consistency verification rule to determine whether the received data input fulfils each of the at least one consistency verification rules, wherein the consistency verification unit may further be configured to access the data inventory database to check the received data input against the at least one consistency verification rule and one or more inventory parameters from the inventory database to determine whether the received data input fulfils each of the at least one consistency verification rule. If the consistency verification unit determines that the received data input fulfils each of the at least one consistency verification rule, the data processing management system may be configured to continue processing the data processing request, and, optionally, to set a consistency verification flag as verified for the data processing request. If the consistency verification unit determines that the received data input does not fulfil each of the at least one consistency verification rule, the data processing management system may be configured to stop processing the data processing request and/or to discard the data processing request, and, optionally, to set a consistency verification flag as failed for the data processing request and/or to provide a user with a corresponding consistency error information.

At least one of the data inventory database, the predetermined data processing workflow database, the predetermined technical entity database, the pre-defined task database, the pre-determined execution data database, the formal rule database, the access rule database, and the consistency rule database may be implemented as one or more tabular database(s). Two or more of the data inventory database, the predetermined data processing workflow database, the predetermined technical entity database, the pre-defined task database, the pre-determined execution data database, the formal rule database, the access rule database, and the consistency rule database may be comprised in one or more catalogue databases.

An aspect relates to a data processing management method for automatically adapting a data processing workflow, in particular a telecommunications processing workflow, comprising receiving data input in relation to a data processing request; analysing the data input to determine at least one request parameter; accessing a predetermined data processing workflow database and selecting a data processing workflow based on the at least one request parameter; accessing a predetermined technical entity database and selecting at least one technical entity based on the at least one request parameter; adapting the selected data processing workflow, comprising accessing a pre-defined task database and including at least one pre-defined task from the pre-defined task database into the selected data processing workflow based on the at least one request parameter and the at least one technical entity, and/or adapting at least one task of the selected data processing workflow based on the at least one request parameter and the at least one technical entity; and executing at least one task of the adapted data processing workflow.

The data processing management method may in particular further comprise any combination of features of the data processing management system described herein and/or shown in the appended Figures.

One aspect relates to a non-transient computer-readable storage device containing instructions that, when executed by a computing system, causes the computing system to perform the above data processing management method.

The invention will be further explained using illustrative embodiments shown in the exemplary, appended Figures. The Figures and the corresponding description below is not to be interpreted as limiting. The Figures show:
- **Figure 1:**: shows a schematic overview of an E2E (End-to-End) order journey through the main architectural layers of an order system, in which an exemplary data processing management system may be comprised;
- **Figure 2:**: shows an overview of an exemplary embodiment of a data processing management method according to the disclosure;
- **Figures 3A and 3B:**: contrast a new approach according to the disclosure with a traditional, conventional approach;
- **Figures 4A and 4B:**: highlight benefits of the new approach according to the disclosure;
- **Figure 5:**: shows an exemplary application of the new approach in a case study relating to mobile prepaid pre-activation;
- **Figure 6:**: shows an exemplary embodiment of step S8 of the case study shown in Figure 7;
- **Figure 7:**: shows an exemplary application of the new approach in a case study relating to mobile prepaid activation;
- **Figures 8A and 8B:**: contrast the provisions of a general algorithm under the conventional approach and the new approach;
- **Figures 9A and 9B:**: show an example of a specific implementation (CFS SIM decomposition) associated with the conventional approach and the new approach, respectively;
- **Figures 10A and 10B:**: contrast benefits of the provisions of a general algorithm for dynamic orchestration under the new approach compared to the conventional approach;
- **Figures 11A and 11B:**: show an example of a specific implementation (activation data processing request) associated with the conventional approach and the new approach, respectively;
- **Figures 12A and 12B:**: show an exemplary procedure of creating a new data processing workflow under the conventional approach and under the new approach;
- **Figure 13:**: shows an exemplary system for implementing the claimed subject matter including a general purpose computing device in the form of a conventional computing environment.

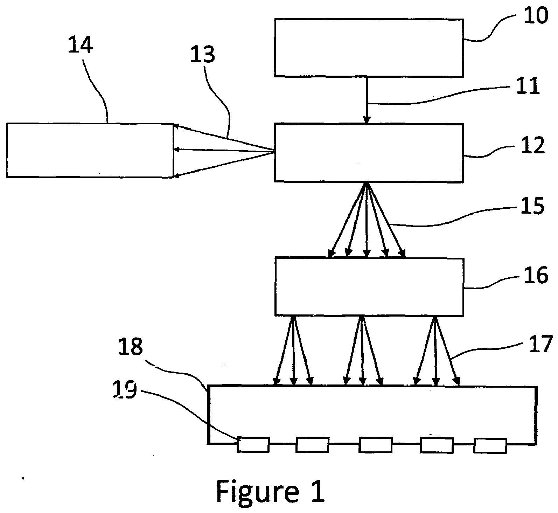

**Figure 1** shows a schematic overview of an E2E (End-to-End) order journey through the main architectural layers of an order system, in which an exemplary data processing management system may be comprised.

In particular, a customer order is received and/or captured at entry point **10.** Said customer order is converted by entry point **10** into a commercial order **11,** wherein the commercial order **11** is transmitted to a commercial order manager **12.** The commercial order manager **12** is configured to process to commercial order **11** into one or more fulfillment orders **13** and one or more provisioning orders **15.**

The one or more fulfillment orders **13** may relate to one or more CFS fulfillment orders. The one or more fulfillment orders **13** may be further directed to one or more fulfillment systems **14.** Said one or more fulfillment systems **14** may for example relate to billing systems and/or shipping systems.

The one or more provisioning orders **15** may relate to one or more CFS provisioning orders. The one or more provisioning orders **15** may be directed to a service order manager **16,** wherein the service order manager **16** may be configured to receive and process the one or more provisioning orders **15.** In particular, the service order manager **16** may be configured to generate, based on the one or more provisioning orders **15,** one or more technical actions/sub-processes **17.**

The one or more technical actions/subprocesses **17** may relate to one or more RFS technical actions/subprocesses. Said one or more technical actions/subprocesses **17** may be further directed towards downstream systems **18,** wherein downstream systems **18** may comprise one or more downstream subsystems **19** configured to implement and/or execute one or more of said one or more technical actions/subprocesses **17.**

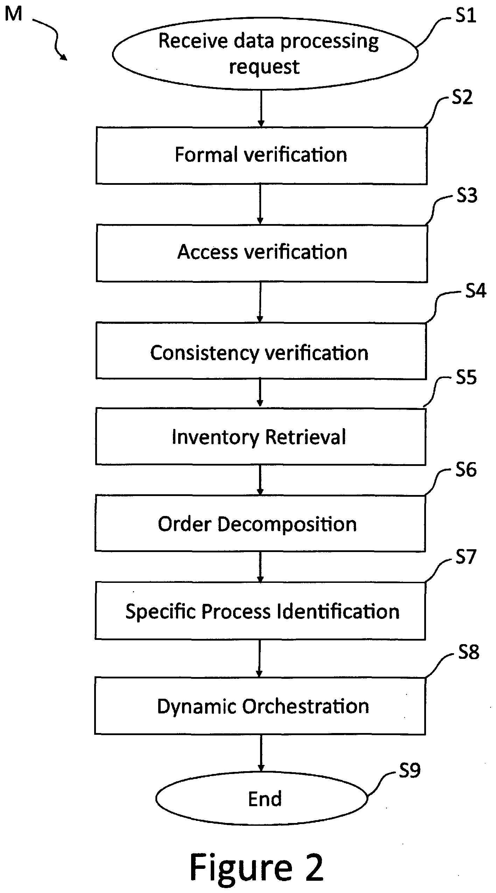

**Figure 2** shows an overview of an exemplary embodiment of a data processing management method **M** according to the disclosure. It should be noted that the below sequence of steps is meant to be illustrative only, and is not to be interpreted as restrictive. In particular, the sequence of steps outlined below may be deviated from and/or one or more additional steps may be included in the exemplary method **M** and/or one or more of steps **S1** to **S9** may be omitted.

In particular, at exemplary step **S1,** a data input relating to a data processing request may be received. The data processing request may for example be a provisioning order **15,** as seen in Figure 1. The data input and/or the data processing request may further be received by a reception unit of a data processing management system, wherein the reception unit is in particular configured to receive the data input in relation to a data processing request. In the exemplary embodiment, the reception unit may be configured to receive the data input from a human user or a digital user. The data processing request may comprise a textual input, voice input, and/or a digital input.

At exemplary step **S2,** the received data processing request and/or the received data input may be subjected to formal verification. Formal verification may comprise format validation of the received data input and/or the received data processing request from any upstream systems. In particular, formal verification may be undertaken by a formal verification unit comprised by an exemplary data processing management system. The formal verification may comprise accessing a formal rule database comprising at least one formal verification rule. The formal rule database may be implemented as one or more metadata tables. The at least one formal verification rule may be a formal rule and/or formal requirement necessary for the further processing of the data processing request. In particular, the formal verification may be undertaken by a formal verification unit, as described above.

In particular, the formal verification unit may be configured to check the received data input against the at least one formal verification rule to determine whether the received data input fulfils each of the at least one formal verification rule. If the formal verification unit determines that the received data input fulfils each of the at least one formal verification rule, the data processing management system may be configured to continue processing the data processing request.

Formal verification may further be implemented as a toggle-able feature. In other words, the formal verification unit may be configured to be switched from an operational mode, in which the formal verification unit undertakes formal verification of received data input, to a non-operational mode, in which the formal verification unit does not undertake formal verification of received data input and the data processing management system continues processing the data processing request without formal verification.

Furthermore, if the formal verification unit determines that the received data input does not fulfil each of the at least one formal verification rule, the formal verification unit and/or the exemplary data processing management system may be configured to stop processing the data processing request, and, optionally, to set a formal verification flag as failed for the data processing request and/or to provide a user with a corresponding formal error information.

At exemplary step **S3,** the received data processing request and/or the received data input may be subjected to access verification. Access verification may in particular comprise request validation of the received data processing request and/or the received data input in terms of work-in-progress management. In particular, access verification may be undertaken by an access verification unit comprised by an exemplary data processing management system. Access verification may comprise accessing an access rule database comprising at least one access verification rule. The access rule database may be implemented as one or more metadata tables. In particular, the at least one access verification rule may comprise a compatibility matrix with entities and data processing requests currently in progress and/or currently being operated on by the exemplary data processing management system. The at least one access verification rule may be an access rule and/or access requirement necessary for the further processing of the data processing request. In particular, the access verification may be undertaken by an access verification unit, as described above.

The access verification unit may be configured to check the received data input against the at least one access verification rule to determine whether the received data input fulfils each of the at least one access verification rule. If the access verification unit determines that the received data input fulfils each of the at least one access verification rule, the data processing management system may be configured to continue processing the data processing request.

Access verification may further be implemented as a toggle-able feature. In other words, the access verification unit may be configured to be switched from an operational mode, in which the access verification unit undertakes access verification of received data input, to a non-operational mode, in which the access verification unit does not undertake access verification of received data input and the data processing management system continues processing the data processing request without access verification.

Furthermore, if the access verification unit determines that the received data input does not fulfil each of the at least one access verification rule, the access verification unit and/or the exemplary data processing management system may be configured to stop processing the data processing request, and, optionally, to set an access verification flag as failed for the data processing request and/or to provide a user with a corresponding access error information.

At exemplary step **S4,** the received data processing request and/or the received data input may be subjected to consistency verification. In particular, consistency verification may be undertaken by a consistency verification unit of an exemplary data processing management system. The consistency verification may comprise accessing a consistency rule database comprising at least one consistency verification rule and/or a data inventory database of the exemplary data processing management system. Consistency verification may in particular comprise request validation of the received data processing request and/or the received data input against a service configuration stored in the data inventory database. The consistency rule database may be implemented as one or more metadata tables. The at least one consistency verification rule may be a consistency rule and/or consistency requirement necessary for the further processing of the data processing request. In particular, the at least one consistency verification rule may comprise a compatibility matrix with entities and data processing requests currently in a data inventory database of the exemplary data processing management system and/or currently being operated on by the exemplary data processing management system.

The consistency verification unit may be configured to check the received data input against the at least one consistency verification rule to determine whether the received data input fulfils each of the at least one consistency verification rule, wherein the consistency verification unit may further be configured to access the data inventory database to check the received data input against the at least one consistency verification rule and one or more inventory parameters from the data inventory database to determine whether the received data input fulfils each of the at least one consistency verification rule.

If the consistency verification unit determines that the received data input fulfils each of the at least one consistency verification rule, the data processing management system may be configured to continue processing the data processing request, and, optionally, to set a consistency verification flag as verified for the data processing request.

Consistency verification may further be implemented as a toggle-able feature. In other words, the consistency verification unit may be configured to be switched from an operational mode, in which the - consistency verification unit undertakes consistency verification of received data input, to a non-operational mode, in which the consistency verification unit does not undertake consistency verification of received data input and the data processing management system continues processing the data processing request without consistency verification.

Furthermore, if the consistency verification unit determines that the received data input does not fulfil each of the at least one consistency verification rule, the data processing management system may be configured to stop processing the data processing request and/or to discard the data processing request, and, optionally, to set a consistency verification flag as failed for the data processing request and/or to provide a user with a corresponding consistency error information.

At exemplary step **S5,** the data inventory database may be accessed, preferentially by a data processing request analysis unit of the exemplary data processing management system, to retrieve at least one inventory parameter from the data inventory database, wherein the at least one inventory parameter may be associated with the data input and/or the data processing request. In particular, the at least one inventory parameter may comprise all entities of the inventory database associated with the data input and/or the data processing request.

At exemplary step **S6,** the received data input and/or the received data processing request is processed by order decomposition. In particular, during order decomposition, one or more technical entities may be determined based on the received data input and/or the received data processing request. Furthermore, during order decomposition, one or more functional tasks or actions to be executed may be determined based on at least the one or more technical entities.

Order decomposition, which may also be referred to as automatic design, may in particular comprise analysing the data input to determine at least one request parameter. The analysing the data input to determine at least one request parameter may be undertaken by a data processing request analysis unit of the exemplary data processing management system. The data processing request analysis unit may be configured to use any method or means to perform the analysis, such as for example parsing of the data input and/or natural language processing. The at least one request parameter may comprise at least one parameter specific to the received data input and/or the data processing request. The at least one request parameter may further comprise one or more of the at least one inventory parameter retrieved during step **S5.**

Order decomposition may further comprise accessing a predetermined technical entity database and selecting at least one technical entity based on the at least one request parameter. The at least one technical entity may for example relate to input/output relations, priorities, and/or cardinalities. In particular, the exemplary data processing management system may in particular further comprise a data processing workflow parameter unit configured to access a predetermined technical entity database and to select at least one technical entity based on the at least one request parameter, wherein such an operation may also be referred to as Entity Decomposition/Creation. Furthermore, the data processing workflow parameter unit may be configured to assign to each selected technical entity a corresponding technical entity value based on the data input and/or the at least one request parameter. In other words, the data processing workflow parameter unit may be configured to enrich each selected technical entity with a corresponding technical entity value based on the data input and/or the at least one request parameter, wherein such an operation may also be referred to as Entity Enrichment. The data processing workflow parameter unit and the predetermined technical entity database may in particular comprise any combination of features, as described above. Furthermore, the data processing workflow parameter unit may be configured to access a consolidation rule database comprising at least one consolidation rule for combining one or more technical entities into a further technical entity and to combine at least two of the selected technical entities into a further selected technical entity according to the at least one consolidation rule, wherein such an operation may also be referred to as Consolidation. In particular, the data processing workflow parameter unit may therefore be able to generate and/or select complex technical entities from the technical entities contained in the predetermined technical entity database.

Order decomposition may in particular further comprise accessing a predetermined data processing workflow database and to select a data processing workflow, in particular of the predetermined data processing workflow database, based on the at least one request parameter. In particular, the data processing management system in particular further comprises a data processing workflow retrieval unit configured to access a predetermined data processing workflow database and to select a data processing workflow, in particular of the predetermined data processing workflow database, based on the at least one request parameter, and, optionally, the at least one technical entity. In particular, a selected data processing workflow may comprise at least one predetermined task to be executed and/or performed. Furthermore, a selected data processing workflow may comprise at least a predetermined sequence in which the at least one predetermined task is to be performed and/or executed. The data processing workflow retrieval unit and the predetermined data processing workflow database may be implemented having one or more features, as described above.

Order decomposition may further comprise adapting, preferentially by a data processing workflow adapting unit, the selected data processing workflow. The adapting may in particular comprise accessing a pre-defined task database and including at least one pre-defined task from the pre-defined task database into the selected data processing workflow based on the at least one request parameter and/or the at least one technical entity. In particular, the pre-defined task database may comprise one or more pre-defined tasks, wherein each of the one or more pre-defined tasks may be associated with at least one possible value of a request parameter and/or of a technical entity. The adapting may further comprise adapting at least one task of the selected data processing workflow based on the at least one request parameter and the at least one technical entity. The at least one task of the selected data processing workflow may be one of at least one predetermined task of the selected data processing workflow and at least one pre-defined task included into the selected data processing workflow. Furthermore, the data processing workflow adapting unit may further comprise any combination of features, as described above.

Specifically, order decomposition may therefore comprise defining, based on one or more of the above inputs and rules, for each entity create and/or adapted one or more tasks, such as functional actions, to be executed.

At exemplary step **S7,** one or more of the tasks to be executed of the adapted data processing workflow may be grouped together and identified as one or more specific processes to be executed by a data processing workflow execution unit. In particular, by such grouping of tasks to be executed into one or more specific processes, an efficiency of the execution by the data processing workflow execution unit may be significantly increased.

At exemplary step **S8,** which may be referred to as dynamic orchestration, the adapted data processing workflow may be executed, preferentially by the data processing workflow execution unit.

In particular, dynamic orchestration may comprise executing at least one task, preferentially all tasks, of the adapted data processing workflow. The data processing workflow execution unit may comprise one or more processors and/or one or more computing systems configured to execute at least one task of the adapted data processing workflow.

In particular, the dynamic orchestration may further comprise, prior to the execution of the adapted data processing workflow, defining, preferentially by static definition, the adapted data processing workflow as a specific sequence of the tasks to be executed.

The workflow execution unit may be configured to access a pre-determined execution data database and to retrieve execution data associated with the at least one task of the adapted data processing workflow, wherein the workflow execution unit may be configured to execute the adapted data processing workflow according to the retrieved execution data. The pre-determined execution data database may in particular comprise execution data, wherein the execution data comprises specific information for executing the respective, associated at least one task. For example, the execution data of a specific associated task may include memory location information, naming rules, task execution sequences, necessary previous tasks to be completed before processing the specific task, and/or possible next tasks to be completed after processing the specific task. The pre-determined execution data database may further comprise a mapping between each of the at least one request parameters, the at least one technical entities, the at least one task of the adapted workflow, and/or an output of each of the executed tasks of the adapted data processing workflow.

In particular, the workflow execution unit may comprise any combination of features, as described above.

Furthermore, the dynamic orchestration may further comprise providing a mapping between the input parameters, e.g. the received data input and/or one or more of the determined request parameters, and any output parameters generated by the execution of the adapted data processing workflow.

The exemplary method **M** may end at step **S9.**

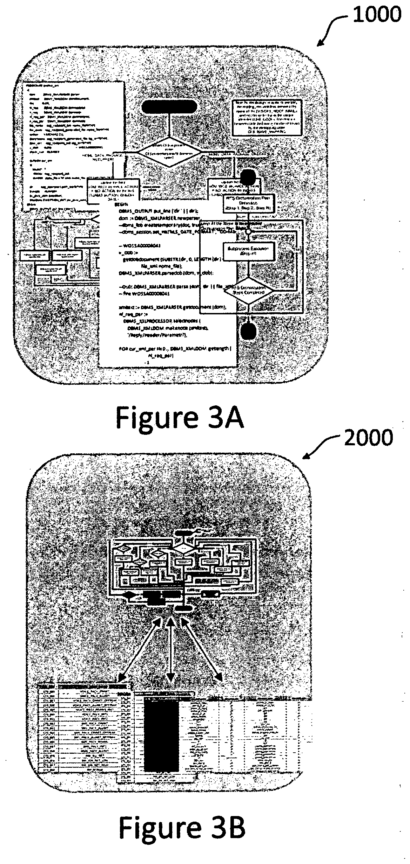

**Figure 3A** and **Figure 3B** contrast the new approach **2000** according to the disclosure with a traditional, conventional approach **1000.**

In particular, under the conventional approach **1000,** data processing workflows are hardcoded.

For example, however, under the new approach **2000,** generic algorithm-based system is provided that is able to interpret one or more rules defined in, e.g., a catalogue to generate or amend data processing workflows. This significantly increases the efficiency, reliability, and speed of generating or amending data processing workflows. Advantageously, approach provides for an increased flexibility when new data processing workflows are to be generated or existing data processing workflows are intended to be amended. Particularly, based on this approach little time and skill are necessary and specifically compared to a conventional approach significantly less time and skill are necessary.

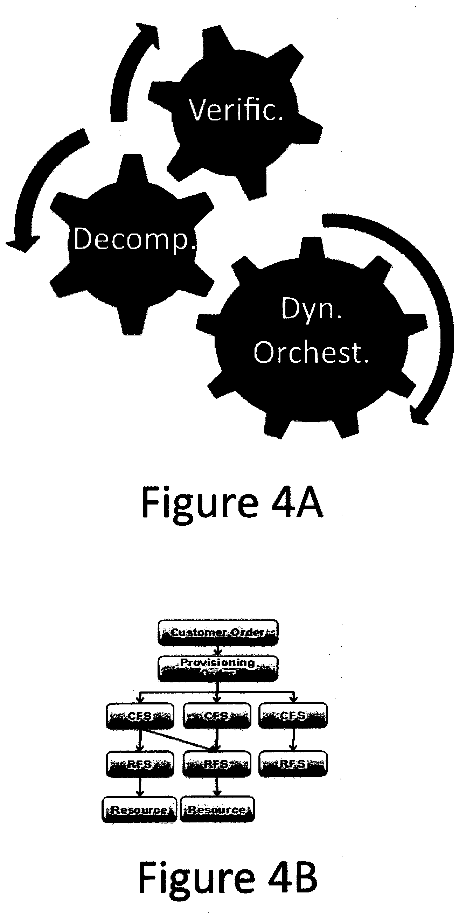

**Figure 4A** and **Figure 4B** further highlight benefits of the new approach **2000** according to the disclosure. In particular, Figure 4A shows that the benefits imparted by the new approach **2000** at different stages of an exemplary method **M** interact to provide one or more overall, synergistic advantages, as illustrated by the interacting cogwheels.

In particular, the new approach **2000** offers benefits through the provision of verification functionalities, such as the formal verification, access verification, and consistency verification, which may be provided as a series of catalogue-driven validation functionalities. In particular, it is therefore easy to enable and disable specific verification functionalities or their sequence via simple configuration of the data processing management system.

Furthermore, as illustrated in Figure 4B, the new approach **2000** allows for a splitting between, for example, CFS and RFS, which in turn allows to abstract the BSS layer regardless of the complexity of a commercial offer. Therefore, it is possible under the new approach **2000** to isolate the business solution from the technical solution. Furthermore, a launch of a new product that does not require new RFS or specific processes does not require any additional development under the new approach **2000.**

Furthermore, a data processing management system according to the disclosure may execute the process by building the orchestration plan dynamically depending on the RFSs decomposed and leveraging on a generic algorithm that is able to interpret all the specific rules modeled for example in a catalogue. This imparts significant advantages in all implementation and test phases.

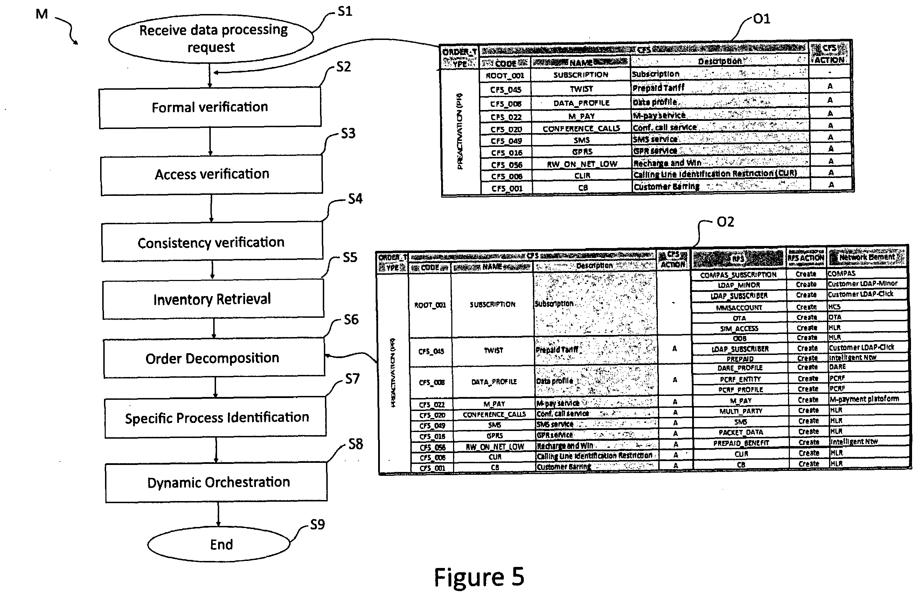

**Figure 5** shows an exemplary application of the new approach **2000** in a case study relating to mobile prepaid pre-activation.

At step **S1** of the exemplary method **M,** a provisioning order in the form of a data processing request **01** relating to mobile prepaid pre-activation is received, for example from a commercial order manager. In particular, the shown data processing request **01** is shown as an exemplary data processing request, wherein furthermore only a section of the data processing request **01** is shown in Figure 5.

At exemplary step **S2,** the received data processing request **01** and/or the received data input may be subjected to formal verification. In particular, formal verification may be undertaken by a formal verification unit comprised by an exemplary data processing management system. The formal verification may comprise accessing a formal rule database comprising at least one formal verification rule. In the presently shown illustrative example, the formal rule database comprises three formal verification rules. A first formal verification rule stipulates that a MSISDN of the received data processing request and/or the received data input may not be null. A second formal verification rule stipulates that an ICCID of the received data processing request and/or the received data input may not be null. A third formal verification rule stipulates that a subscription ID of the received data processing request and/or the received data input may not be null.

At exemplary step **S3,** the received data processing request **O1** and/or the received data input may be subjected to access verification. In particular, access verification may be undertaken by an access verification unit comprised by an exemplary data processing management system. Access verification may comprise accessing an access rule database comprising at least one access verification rule. In the presently shown illustrative example, the access rule database comprises one access verification rule. A first access verification rule stipulates that there should be no other data processing request currently being processed by the data processing management system with the same order ID or subscription ID.

At exemplary step **S4,** the received data processing request **O1** and/or the received data input may be subjected to consistency verification. In particular, consistency verification may be undertaken by a consistency verification unit of an exemplary data processing management system. The consistency verification may comprise accessing a consistency rule database comprising at least one consistency verification rule and/or a data inventory database of the exemplary data processing management system. In the shown illustrative example, the consistency rule database comprises one consistency verification rule. A first consistency verification rule stipulates that no other subscription may be present in the data inventory database that has the same MSISDN as contained in the received data processing request **01** and/or the received data input.

For simplicity, exemplary step **S5** is not further illustrated in Figure 5.

Furthermore, Figure 5 shows an exemplary section **O2** of a configuration and/or rules used in the order decomposition at step **S6,** as performed on the basis of the received data processing request **01** and/or the received data input. As an example, the exemplary section **O2** is shown as a metadata table. In particular, during order decomposition, one or more technical entities (see for example column RFS of **O2)** are determined based on the received data input and/or the received data processing request. Furthermore, during order decomposition, one or more functional tasks or actions (see for example column RFS Action of **O2)** to be executed are determined based on at least the one or more technical entities.

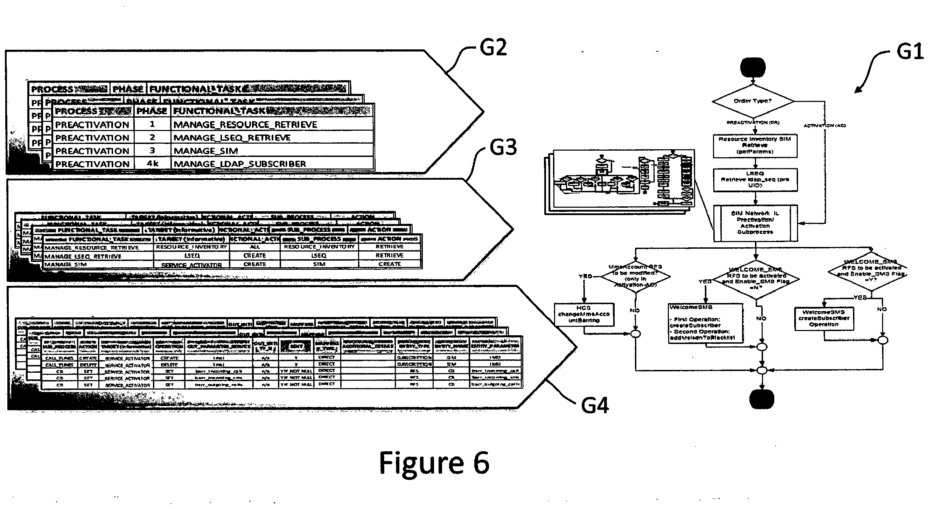

For simplicity, exemplary step **S7** is not further illustrated in Figure 5, while an exemplary overview of step **S8** is given in Figure 6.

**Figure 6** shows an exemplary embodiment of step **S8** of the case study shown in Figure 5.

At exemplary step **S8,** which may be referred to as dynamic orchestration, the adapted data processing workflow may be executed, preferentially by the data processing workflow execution unit.

In particular, dynamic orchestration may comprise executing at least one task, preferentially all tasks, of the adapted data processing workflow. The data processing workflow execution unit may comprise one or more processors and/or one or more computing systems configured to execute at least one task of the adapted data processing workflow. An exemplary graphical representation **G1** illustrating the steps of execution of an exemplary adapted data processing workflow is shown in Figure 6.

In particular, the dynamic orchestration may further comprise, prior to the execution of the adapted data processing workflow, defining, preferentially by static definition, the adapted data processing workflow as a specific sequence of the tasks to be executed, for example in one or more specific process definitions. In particular, graphical representation **G2** shows exemplary configurations and/or rules, shown in this example as a series of metadata tables, to be used during specific process definition.

The workflow execution unit may be configured to access a pre-determined execution data database and to retrieve execution data associated with the at least one task of the adapted data processing workflow, wherein the workflow execution unit may be configured to execute the adapted data processing workflow according to the retrieved execution data. The pre-determined execution data database may in particular comprise execution data, wherein the execution data comprises specific information for executing the respective, associated at least one task. For example, the execution data of a specific associated task may include memory location information, naming rules, task execution sequences, necessary previous tasks to be completed before processing the specific task, and/or possible next tasks to be completed after processing the specific task. In particular the workflow execution unit may therefore define one or more functional tasks based on the tasks to be executed and the retrieved execution data. In particular, graphical representation **G3** shows exemplary configurations and/or rules, shown in this example as a series of metadata tables, to be used during functional task definition.

Furthermore, the dynamic orchestration may further comprise providing a mapping between the input parameters, e.g. the received data input and/or one or more of the determined request parameters, and any output generated by the execution of the adapted data processing workflow. In particular, graphical representation **G4** shows exemplary configurations and/or rules, shown in this example as a series of metadata tables, to be used during mapping between input parameters and the output. In particular, such mapping may also be referred to as Input/Output field Decode.

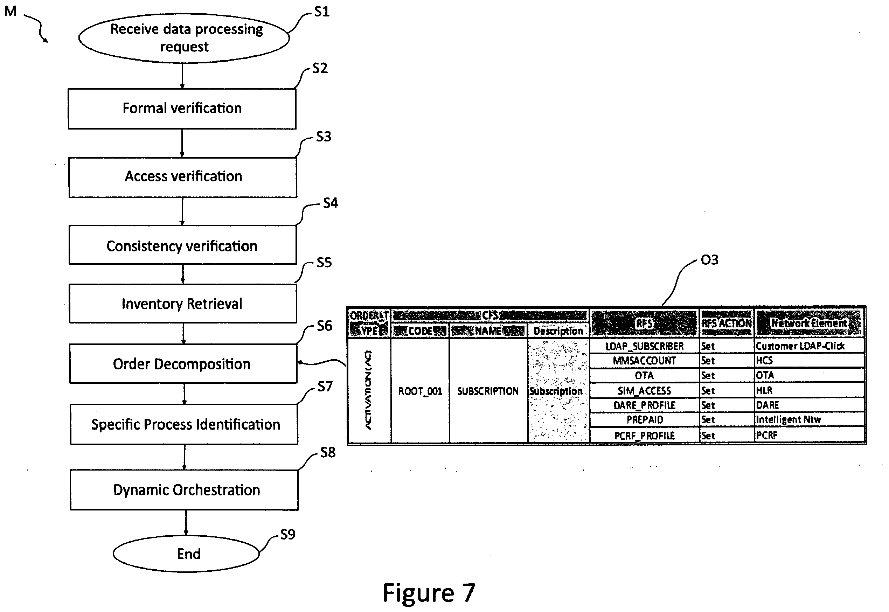

**Figure 7** shows an exemplary application of the new approach **2000** in a case study relating to mobile prepaid activation. In particular, the case study may be based on a customer having bought a SIM card and making a first call directly via the SIM card or activating the SIM card via a portal, mobile app, and/or Interactive Voice Response (IVR). In all said cases, a mobile prepaid activation data processing request may be directed form a commercial order manager to an exemplary data processing management system.

At step **S1** of the exemplary method **M,** a provisioning order in the form of a data processing request relating to mobile prepaid activation is received, for example from a commercial order manager.

At exemplary step **S2,** the received data processing request and/or the received data input may be subjected to formal verification. In particular, formal verification may be undertaken by a formal verification unit comprised by an exemplary data processing management system. The formal verification may comprise accessing a formal rule database comprising at least one formal verification rule. In the presently shown illustrative example, the formal rule database comprises one formal verification rule. A first formal verification rule stipulates that a subscription ID of the received data processing request and/or the received data input may not be null.

At exemplary step **S3,** the received data processing request and/or the received data input may be subjected to access verification. In particular, access verification may be undertaken by an access verification unit comprised by an exemplary data processing management system. Access verification may comprise accessing an access rule database comprising at least one access verification rule. In the presently shown illustrative example, the access rule database comprises one access verification rule. A first access verification rule stipulates that there should be no other data processing request currently being processed by the data processing management system with the same order ID or subscription ID.

At exemplary step **S4,** the received data processing request and/or the received data input may be subjected to consistency verification. In particular, consistency verification may be undertaken by a consistency verification unit of an exemplary data processing management system. The consistency verification may comprise accessing a consistency rule database comprising at least one consistency verification rule and/or a data inventory database of the exemplary data processing management system. In the shown illustrative example, the consistency rule database comprises two consistency verification rules. A first consistency verification rule stipulates that a subscription ID of the received data processing request and/or the received data input must be present in the data inventory database. A second consistency verification rule stipulates that a status of the subscription ID of the received data processing request and/or the received data input must be marked as "Preactivated" in the data inventory database.

For simplicity, exemplary step **S5** is not further illustrated in Figure 7

Furthermore, Figure 7 shows an exemplary section **O3** of a configuration and/or rules used in the order decomposition at step **S6** as performed on the basis of the received data processing request and/or the received data input. As an example, the exemplary section **O3** is shown as a metadata table. In particular, during order decomposition, one or more technical entities (see for example column RFS of **O3)** are determined based on the received data input and/or the received data processing request. Furthermore, during order decomposition, one or more functional tasks or actions (see for example column RFS Action of **O3**) to be executed are determined based on at least the one or more technical entities.

For simplicity, exemplary steps **S7** and **S8** are not further illustrated in Figure 7.

In the shown case study, the services have been preconfigured with a pre-activation data processing request, and activation therefore only requires a subset of RFs to be enabled. Said SET actions reflect actions performed by downstream systems, such as during step **S8.**

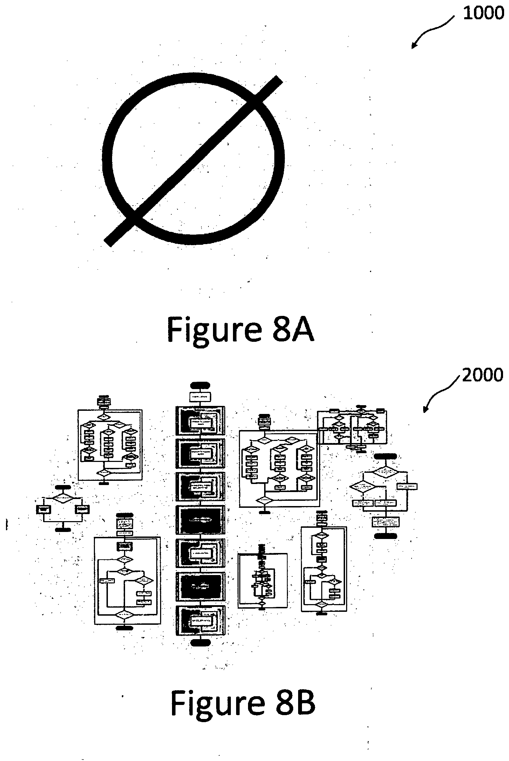

**Figures 8A to 12B** further highlight some of the several advantages of an exemplary new approach **2000** according to the present disclosure over the traditional, conventional approach **1000** to data processing management.

In particular, the data processing management of the present disclosure allows for a catalogue-driven architecture, which allows for an acceleration of development and deployment of new services and business requirements (which in turn may lead to an improved Time-to-Market TTM). Furthermore, the disclosure allows for improvements and a reduction of Total-Cost-of-Ownership (TCO) due to the improved manageability of the solution, as well as improved flexibility and reliability of the solution.

In particular, this is possible due to the generic algorithm approach of the disclosure that is able to interpret generic rules stored in the data processing management system, and in particular the catalogue, already developed and tested, that absorb the complexity related to the specific implementations reducing them in easy configurations.

**Figure 8A** and **Figure 8B** contrast the provisions of a general algorithm under the conventional approach **1000** and the new approach **2000.** As can be seen in Figure 8A, the conventional approach **1000** does not provide for or rely upon a general algorithm. Changes under the conventional approach **1000** therefore require skill and are time-consuming. As can be seen in Figure 8B, the new approach **2000** relies upon a defined general algorithm, which may comprise several thousand lines of code. In particular, the general algorithm can easily be changed by reconfiguration of the general algorithm, while a workflow-by-workflow change as necessary under the conventional approach **1000** is not necessary.

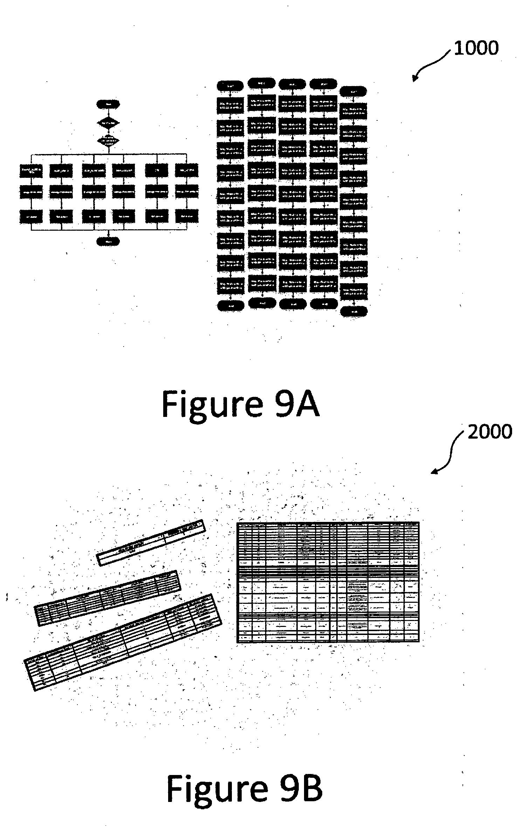

**Figure 9A** and **Figure 9B** show an example of a specific implementation (CFS SIM decomposition) associated with the conventional approach **1000** and the new approach **2000,** respectively.

In particular, the conventional approach **1000** relies on the provision of six different specific algorithms to be implemented, as shown in Figure 9A. In contrast, the new approach **2000,** as shown in Figure 9B, relies on a catalogue-based architecture, wherein implementation only requires metadata to be added into a configuration table (in the present example approximately 50 lines) of the catalogue-based architecture. In particular, such an example further highlights the significant improvement of the human-machine interaction achieved by the present disclosure.

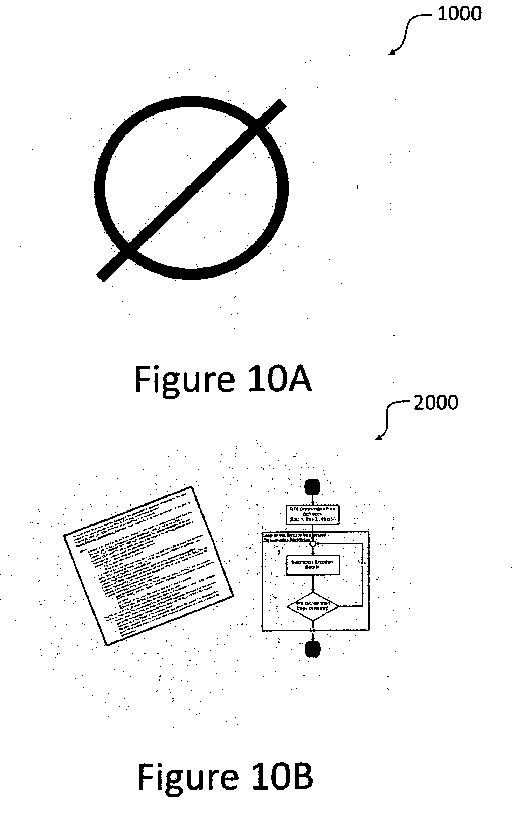

**Figure 10A** and **Figure 10B** contrast benefits of the provisions of a general algorithm for dynamic orchestration under the new approach **2000** compared to the conventional approach **1000.** As can be seen in Figure 10A, the conventional approach **1000** does not provide for or rely upon a general algorithm. Changes under the conventional approach **1000** therefore require skill and are time-consuming. As can be seen in Figure 10B, the new approach **2000** relies upon a defined general algorithm, which may comprise several thousand lines of code. In particular, the general algorithm can easily be changed by reconfiguration of the general algorithm, while a workflow-by-workflow change as necessary under the conventional approach **1000** is not necessary.

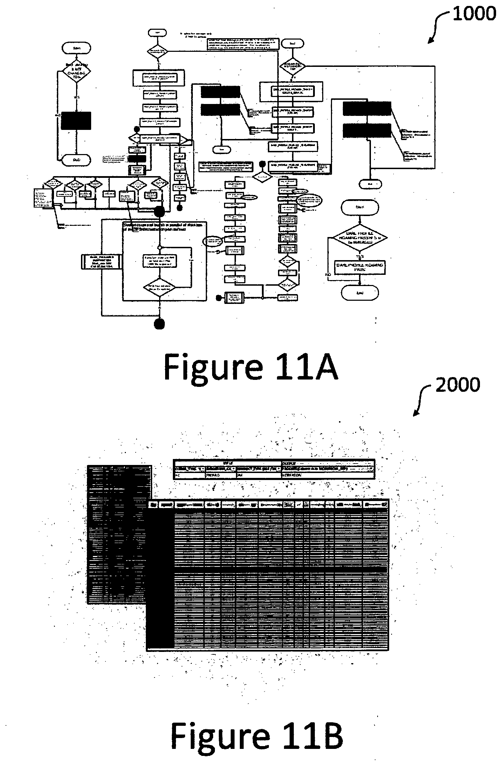

**Figure 11A** and **Figure 11B** show an example of a specific implementation (activation data processing request) associated with the conventional approach **1000** and the new approach **2000,** respectively.

In particular, the conventional approach **1000** relies on the provision of eight different specific algorithms to be implemented, as shown in Figure 11A. In contrast, the new approach **2000,** as shown in Figure 11B, relies on a catalogue-based architecture, wherein implementation only requires metadata to be added into a configuration table of the catalogue-based architecture. In particular, such an example further highlights the significant improvement of the human-machine interaction achieved by the present disclosure.

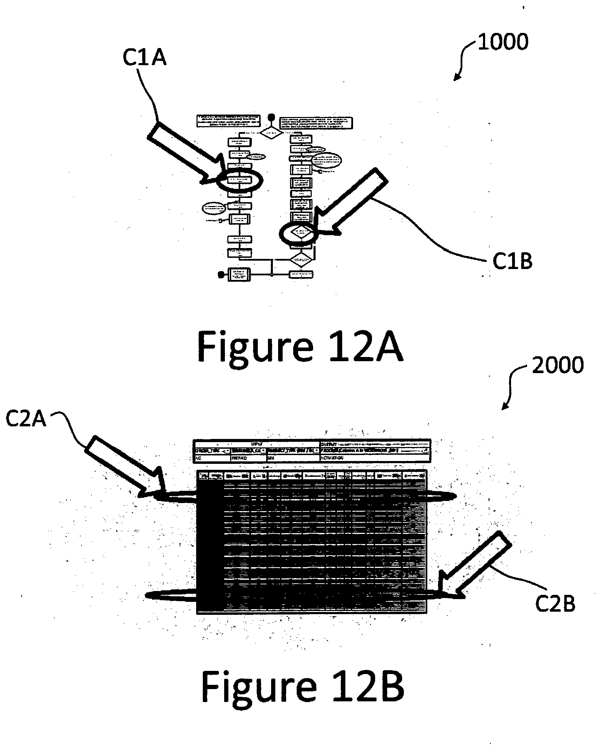

**Figure 12A** and **Figure 12B** show an exemplary procedure of creating a new data processing workflow under the conventional approach **1000** and under the new approach **2000,** while similar considerations are applicable to the case in which an existing data processing workflow has to be adapted or when a new component of a data processing workflow has to be designed automatically.

Under the conventional approach **1000,** a required change to an existing data processing workflow may necessitate a new data processing workflow to be generated. In particular, any changes will need to be coded into the new data processing workflow. Some such changes are highlighted as changes **C1A** and **C1B** in Figure 12A. However, such an approach is both time-consuming and requires often very specific skills to undertake.

Under the new approach **2000,** a required change to an existing data processing workflow may only require metadata changes, such as updating, adding, and/or modifying of rows and/or columns in some database tables of the data processing management system. In particular, any such changes may be undertaken without requiring specific skills, such as specific programming skills, and can be performed in a significantly reduced amount of time due to the reduced complexity. Furthermore, any such changes are less error-prone due to said reduced complexity, and further allow for more reliable testing, as corresponding tests may be much more specific (i.e. said test may be minimized).Some such changes are highlighted as changes **C2A** and **C2B** in Figure 12B.

In particular, the new approach **2000** therefore may allow for savings in both time and effort of at least 60% to 70% when compared to the conventional approach **1000.**

The invention is not limited to the exemplary embodiments shown and described herein and/or the appended Figures. Specifically, a data processing management system, corresponding method, and corresponding storage medium may comprise any combination of features described or shown herein and/or the appended Figures. In particular, the invention is not to be restricted except in light of the appended claims.

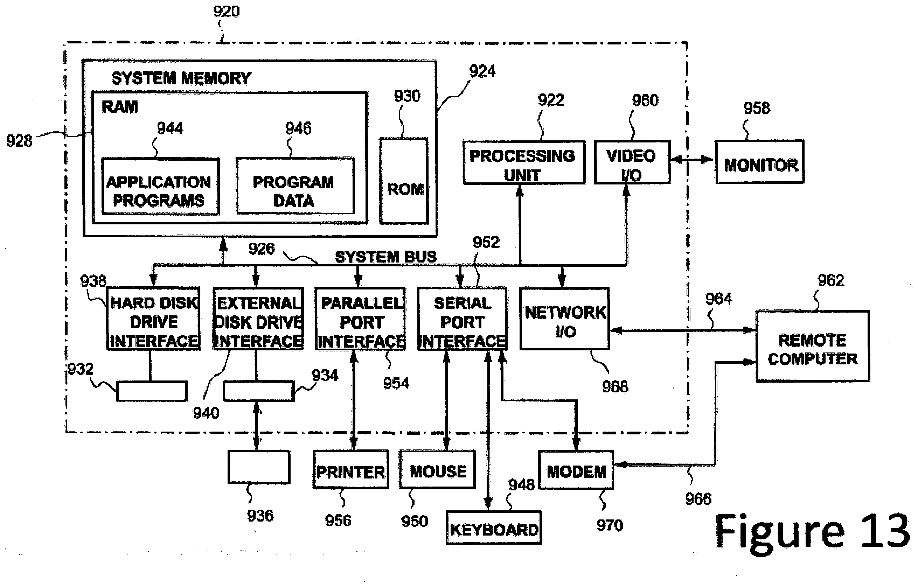

**Figure 13** shows an exemplary system for implementing the claimed subject matter including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and non-volatile memory, such as a random access memory (RAM) 928 and a read only memory (ROM) 930. A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD-ROM for an optical disk drive. The hard disk drive 932 and the external disk drive 934 are connected to the system bus 926 by a hard disk drive interface 938 and an external disk drive interface 940, respectively. The drives and their associated computer-readable media provide non-volatile storage of computer readable instructions, data structures, program modules and other data for the personal computer 920. The data structures may include relevant data for the implementation of the method as described above. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figure 1.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. Figure 2 depicts the computer environment networked with remote computer 962.

The remote computer 962 may be another computing environment such as a server, a router, a network PC, a peer device or other common network node, and may include many or all of the elements described above relative to the computing environment 920. The logical connections depicted in Figure 2 include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. In a networked environment, program modules depicted relative to the computing environment 920, or portions thereof, may be stored in a remote memory storage device resident on or accessible to remote computer 962. It will be appreciated that the network connections shown are exemplary and other means of establishing a communications link between the electronic devices may be used.

The above-described computing system is only one example of the type of computing system that may be used to implement the method.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

### List of Reference Numerals

- 10: entry point
- 11: commercial order
- 12: commercial order manager
- 13: fulfilment order
- 14: fulfilment systems
- 15: provisioning order
- 16: service order manager
- 17: technical action/subprocess
- 18: downstream system
- 19: downstream subsystem
- M: method
- 1000: conventional approach
- 2000: new approach
- O1: data processing request
- O2, O3: results
- G1, G2, G3, G4: graphical representation
- C1A, C1B, C2A, C2B: changes
- S1-S9: steps
- 920: conventional computing environment
- 922: processing unit
- 924: system memory
- 926: system bus
- 928: random access memory (RAM)
- 930: read only memory (ROM)
- 932: hard disk drive
- 934: external disk drive
- 936: removable disk
- 938: hard disk drive interface
- 940: external disk drive interface
- 944: one or more application programs
- 946: program data
- 948: keyboard
- 950: mouse
- 952: serial port interface
- 954: parallel port interface
- 956: printer
- 958: monitor
- 960: video input/output
- 962: remote computer
- 964: local area network (LAN)
- 966: wide area network (WAN)
- 968: network I/O

## Claims

1. A data processing management system for automatically adapting a data processing workflow, in particular a telecommunications processing workflow, comprising:
a reception unit configured to receive data input in relation to a data processing request (O1);
a data processing request (O1) analysis unit configured to analyse the data input to determine at least one request parameter;
a data processing workflow retrieval unit configured to access a predetermined data processing workflow database and to select a data processing workflow based on the at least one request parameter;
a data processing workflow parameter unit configured to access a predetermined technical entity database and to select at least one technical entity based on the at least one request parameter;
a data processing workflow adapting unit configured to adapt the selected data processing workflow by:
accessing a pre-defined task database and including at least one pre-defined task from the pre-defined task database into the selected data processing workflow based on the at least one request parameter and the at least one technical entity, and/or
adapting at least one task of the selected data processing workflow based on the at least one request parameter and the at least one technical entity;
a data processing workflow execution unit configured to execute at least one task of the adapted data processing workflow.

2. The data processing management system according to claim 1, wherein the at least one request parameter comprises at least one of a request type, a request issue date, a request due date, a request ID, and a client ID.

3. The data processing management system according one of the preceding claims, wherein the at least one technical entity comprises at least one RFS parameter and/or at least one of a CFS parameter.

4. The data processing management system according one of the preceding claims, wherein the workflow execution unit is configured to access a pre-determined execution data database and to retrieve execution data associated with the at least one task of the adapted data processing workflow,
wherein the data processing workflow execution unit is configured to execute the at least one task of the adapted data processing workflow based on the retrieved execution data.

5. The data processing management system according claim 4, wherein the selected data processing workflow comprises one or more predetermined tasks,
wherein the data processing workflow adapting unit is further configured to adapt the selected data processing workflow by:
accessing the pre-determined execution data database and retrieving execution data associated with the one or more predetermined tasks of the selected data processing workflow, and
removing at least one predetermined task of the selected data processing workflow based on the at least one request parameter and/or the at least one technical entity and/or the retrieved execution data associated with the respective at least one predetermined task.

6. The data processing management system according one of the preceding claims, further comprising a database updating unit configured to:
access the predetermined data processing workflow database, and
store the adapted data processing workflow as a further data processing workflow in the predetermined data processing workflow database.

7. The data processing management system according to one of the preceding claims, wherein the data processing request (O1) is at least one of a mobile prepaid pre-activation request and a mobile prepaid activation request.

8. A data processing management method for automatically adapting a data processing workflow, in particular a telecommunications processing workflow, comprising:
receiving data input in relation to a data processing request (O1);
analysing the data input to determine at least one request parameter;
accessing a predetermined data processing workflow database and selecting a data processing workflow based on the at least one request parameter;
accessing a predetermined technical entity database and selecting at least one technical entity based on the at least one request parameter;
adapting the selected data processing workflow, comprising:
accessing a pre-defined task database and including at least one pre-defined task from the pre-defined task database into the selected data processing workflow based on the at least one request parameter and the at least one technical entity, and/or
adapting at least one task of the selected data processing workflow based on the at least one request parameter and the at least one technical entity;
executing at least one task of the adapted data processing workflow.

9. The data processing management method according to claim 8, wherein the at least one request parameter comprises at least one of a request type, a request issue date, a request due date, a request ID, and a client ID.

10. The data processing management method according one of claims 8 or 9, wherein the at least one technical entity comprises at least one RFS parameter and/or at least one of a CFS parameter.

11. The data processing management method according one of claims 8 to 10, wherein the executing at least one task comprises accessing a pre-determined execution data database and retrieving execution data associated with the at least one task of the adapted data processing workflow,
wherein the executing at least one task comprises executing the at least one task of the adapted data processing workflow based on the retrieved execution data.

12. The data processing management method according one of claims 8 to 11, wherein the selected data processing workflow comprises one or more predetermined tasks,
wherein adapting the selected data processing workflow further comprises:
accessing the pre-determined execution data database and retrieving execution data associated with the one or more predetermined tasks of the selected data processing workflow, and
removing at least one predetermined task of the selected data processing workflow based on the at least one request parameter and/or the at least one technical entity and/or the retrieved execution data associated with the respective at least one predetermined task.

13. The data processing management method according one of claims 8 to 12, further comprising updating the predetermined data processing workflow database:
access the predetermined data processing workflow database, and
store the adapted data processing workflow as a further data processing workflow in the predetermined data processing workflow database.

14. The data processing management method according one of claims 8 to 13, wherein the data processing request (O1) is at least one of a mobile prepaid pre-activation request and a mobile prepaid activation request.

15. A non-transient computer-readable storage device containing instructions that, when executed by a computing system, causes the computing system to perform the method according to one of claims 8 to 14.

## Amended claims

### Amended claims in accordance with Rule 137(2) EPC.

1. A data processing management system for automatically adapting a data processing workflow, in particular a telecommunications processing workflow, comprising:
a reception unit configured to receive data input in relation to a data processing request (O1);
a data processing request (O1) analysis unit configured to analyse the data input to determine at least one request parameter;
a data processing workflow retrieval unit configured to access a predetermined data processing workflow database and to select a data processing workflow based on the at least one request parameter;
a data processing workflow parameter unit configured to access a predetermined technical entity database and to select at least one technical entity based on the at least one request parameter;
a data processing workflow adapting unit configured to adapt the selected data processing workflow by:
accessing a pre-defined task database and including at least one pre-defined task from the pre-defined task database into the selected data processing workflow based on the at least one request parameter and the at least one technical entity, and/or
adapting at least one task of the selected data processing workflow based on the at least one request parameter and the at least one technical entity;
a data processing workflow execution unit configured to execute at least one task of the adapted data processing workflow; and
a database updating unit configured to:
access the predetermined data processing workflow database, and
store the adapted data processing workflow as a further data processing workflow in the predetermined data processing workflow database.

2. The data processing management system according to claim 1, wherein the at least one request parameter comprises at least one of a request type, a request issue date, a request due date, a request ID, and a client ID.

3. The data processing management system according one of the preceding claims, wherein the at least one technical entity comprises at least one RFS parameter and/or at least one of a CFS parameter.

4. The data processing management system according one of the preceding claims, wherein the workflow execution unit is configured to access a pre-determined execution data database and to retrieve execution data associated with the at least one task of the adapted data processing workflow,
wherein the data processing workflow execution unit is configured to execute the at least one task of the adapted data processing workflow based on the retrieved execution data.

5. The data processing management system according claim 4, wherein the selected data processing workflow comprises one or more predetermined tasks,
wherein the data processing workflow adapting unit is further configured to adapt the selected data processing workflow by:
accessing the pre-determined execution data database and retrieving execution data associated with the one or more predetermined tasks of the selected data processing workflow, and
removing at least one predetermined task of the selected data processing workflow based on the at least one request parameter and/or the at least one technical entity and/or the retrieved execution data associated with the respective at least one predetermined task.

6. The data processing management system according to one of the preceding claims, wherein the data processing request (O1) is at least one of a mobile prepaid pre-activation request and a mobile prepaid activation request.

7. A data processing management method for automatically adapting a data processing workflow, in particular a telecommunications processing workflow, comprising:
receiving data input in relation to a data processing request (O1);
analysing the data input to determine at least one request parameter;
accessing a predetermined data processing workflow database and selecting a data processing workflow based on the at least one request parameter;
accessing a predetermined technical entity database and selecting at least one technical entity based on the at least one request parameter;
adapting the selected data processing workflow, comprising:
accessing a pre-defined task database and including at least one pre-defined task from the pre-defined task database into the selected data processing workflow based on the at least one request parameter and the at least one technical entity, and/or
adapting at least one task of the selected data processing workflow based
on the at least one request parameter and the at least one technical entity;
executing at least one task of the adapted data processing workflow; and
updating the predetermined data processing workflow database, including:
accessing the predetermined data processing workflow database, and
storing the adapted data processing workflow as a further data processing workflow in the predetermined data processing workflow database.

8. The data processing management method according to claim 7, wherein the at least one request parameter comprises at least one of a request type, a request issue date, a request due date, a request ID, and a client ID.

9. The data processing management method according one of claims 7 or 8, wherein the at least one technical entity comprises at least one RFS parameter and/or at least one of a CFS parameter.

10. The data processing management method according one of claims 7 to 9, wherein the executing at least one task comprises accessing a pre-determined execution data database and retrieving execution data associated with the at least one task of the adapted data processing workflow,
wherein the executing at least one task comprises executing the at least one task of the adapted data processing workflow based on the retrieved execution data.

11. The data processing management method according one of claims 7 to 10, wherein the selected data processing workflow comprises one or more predetermined tasks,
wherein adapting the selected data processing workflow further comprises:
accessing the pre-determined execution data database and retrieving execution data associated with the one or more predetermined tasks of the selected data processing workflow, and
removing at least one predetermined task of the selected data processing workflow based on the at least one request parameter and/or the at least one technical entity and/or the retrieved execution data associated with the respective at least one predetermined task.

12. The data processing management method according one of claims 7 to 11, wherein the data processing request (O1) is at least one of a mobile prepaid pre-activation request and a mobile prepaid activation request.

13. A non-transient computer-readable storage device containing instructions that, when executed by a computing system, causes the computing system to perform the method according to one of claims 7 to 12.
